# EUROPEAN PATENT SPECIFICATION

(11) **EP 1 324 256 B1**
(45) Date of publication and mention of the grant of the patent: **12.11.2008**
(21) Application number: 02258793.5
(22) Date of filing: 18.12.2002
(51) Int. Cl.: G06K 7/00

(54) **Card connector**
Kartenverbinder
Connecteur de carte

(30) Priority: 21.12.2001 JP 2001390203
(43) Date of publication of application: 02.07.2003
(73) Proprietor: Tyco Electronics AMP K.K., Kawasaki, Kanagawa 213-8535 (JP)
(72) Inventor: Watanabe, Yoshinori, Kokubunji, Tokyo, 185-0013 (JP); Yamaguchi, Kastumi, Saitama, Saitama 338-0832 (JP); Muramatsu, Hidenori, Yokohama, Kanagawa, 240-0024 (JP)
(74) Representative: Johnstone, Douglas Ian

(56) References cited:
- FR-A- 2 687 238
- US-A- 5 225 653
- PATENT ABSTRACTS OF JAPAN vol. 1999, no. 05, 31 May 1999 (1999-05-31) & JP 11 039435 A (MATSUSHITA ELECTRIC IND CO LTD), 12 February 1999 (1999-02-12)
- PATENT ABSTRACTS OF JAPAN vol. 014, no. 189 (P-1037), 17 April 1990 (1990-04-17) & JP 02 035584 A (HITACHI MAXELL LTD), 6 February 1990 (1990-02-06)

## Description

### BACKGROUND OF THE INVENTION

### Field of the Invention

The present invention relates to a card connector which has at least two card accommodating slots that respectively accommodate thin cards such as ISO standard IC cards (known as "smart cards") and thick cards such as PCMCIA standard IC cards.

### Description of the Related Art

In recent years, personal computers have generally shown a rapid spread in use as a result of progress made in computer technology. Especially in the field of notebook-type personal computers, compact computers with high performance have been developed, and computers equipped with card connectors which have two card accommodating slots that respectively accommodate ISO standard IC cards (known as "smart cards"; hereafter referred to simply as "smart cards") and PCMCIA standard IC cards (hereafter referred to simply as "IC cards") have also been developed.

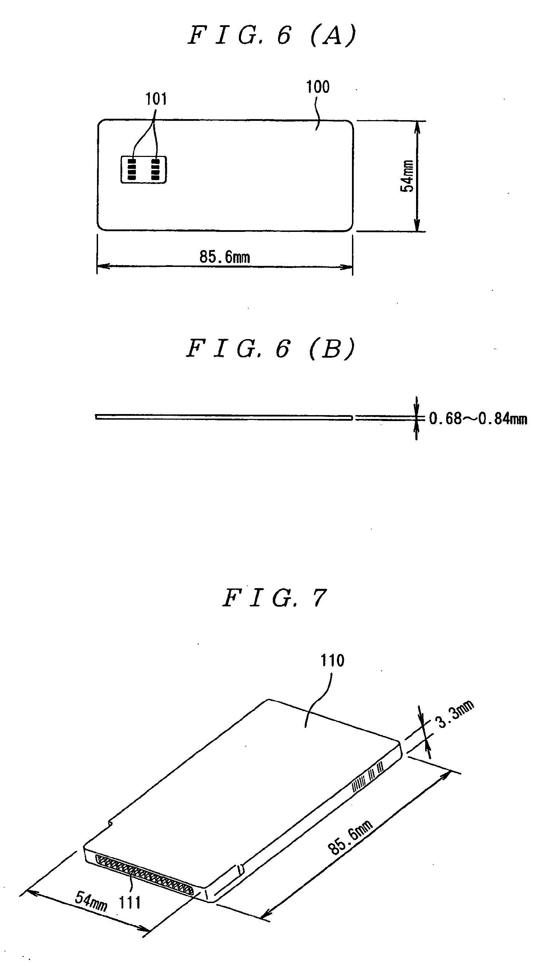

Here, as is shown in Fig. 6, a smart card comprises a plurality of terminal parts 101 on one main surface of the card 100; in regard to dimensions, such a card has a depth of 85.6 mm, a width of 54 mm, and a thickness of 0.68 to 0.84 mm.

Meanwhile, there are three types of IC cards, i.e., type I used as a semiconductor memory card, type II used as a modem card, and type III used as a hard disk card. Of these, the type-I IC card comprises a connector part 111 on one end portion of the card 110 as shown in Fig. 7; as for the dimensions of this card, the depth is 85.6 mm, the width is 54 mm, and the thickness is 3.3 mm. The type-II and type-III IC cards are not shown in the figures; like the type-I IC card, these cards have a depth of 85.6 mm and a width of 54 mm, but have different thicknesses of 5 mm and 10.5 mm, respectively.

When the dimensions of such smart cards 100 and the dimensions of the IC cards are compared, it is seen that the depth and width are the same, and that only the thicknesses of the cards are different, with the smart cards 100 being thinner, and the PCMCIA standard IC cards being thicker.

Thus, since the smart cards 100 are thin and the PCMCIA standard IC cards are thick, the height in the direction of thickness of the card accommodating slot that accommodates smart cards in the above-mentioned card connector is small, while the height in the direction of thickness of the card accommodating slot that accommodates IC cards is large. Furthermore, smart cards are inserted into the card accommodating slot that has a small height, and IC cards are inserted into the card accommodating slot that has a large height.

In such card connectors that accommodate two types of cards with different thicknesses, there is no insertion of thick cards into the card accommodating slots used for cards with a small height; conversely, however, thin cards may be inserted into the card accommodating slot used for cards with a large height.

If a thin card is inserted into the card accommodating slot used for cards with a large height, e.g., if a smart card 100 is inserted into the card accommodating slot used for PCMCIA standard IC cards 110, there is a danger that the plurality of pin contacts corresponding to the card accommodating slot used for IC cards 110, or a portion of the housing, etc., may be bent and damaged by the end portion of the smart card 100. Furthermore, if a smart card 100 is inserted into the above-mentioned card accommodating slot, even if the pin contacts are not damaged, the end user will mistakenly believe that the above-mentioned smart card 100 has been inserted into the appropriate card accommodating slot, and the notebook-type personal computer will not operate normally when the power supply of this computer is switched on.

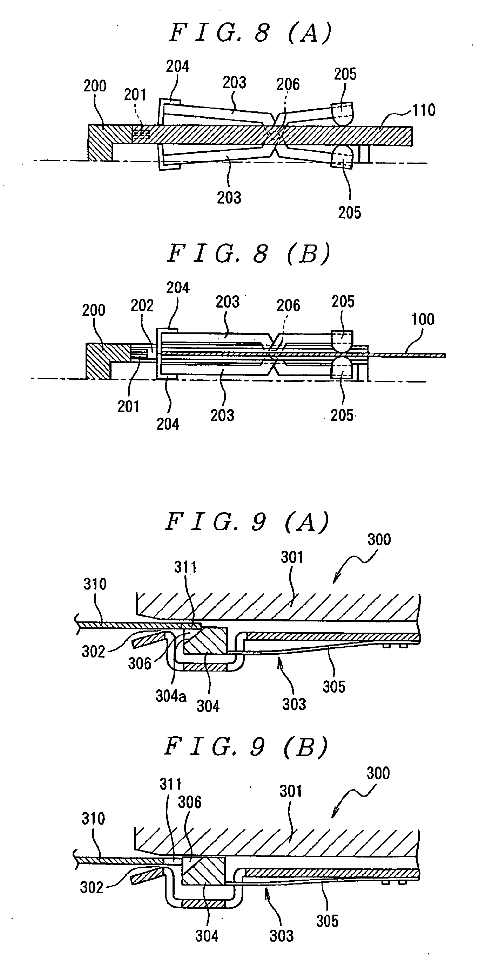

For example, the socket shown in Fig. 8 is known as an IC card socket which prevents such insertion of thin cards into the card accommodating slot used for cards with a large height (see Japanese Patent Application Kokai No. H11-39435).

This IC card socket 200 comprises a plurality of pin contacts 201 that are electrically connected with the IC card 110, and a pair of guide rails 202 that guide the insertion of the IC card 100 onto the pin contacts 201. Furthermore, a set of upper and lower thickness detection levers 203 which are supported by a pivoting shaft 206 so that these levers can pivot are disposed on one of the guide rails 202. Inserted-object clamping parts 205 that detect the thickness of inserted objects that are inserted into the guide rails 202 are disposed on the end portions of the respective thickness detection levers 203 located on the side of the card insertion opening, and shutter parts 204 are disposed on the end portions of the respective thickness detection levers 203 located on the side of the pin contacts.

When a thick IC card 110 is inserted into this IC card socket 200 along the guide rails 202, the inserted-object clamping parts 205 open, and the upper and lower thickness detection levers 203 open about the pivoting shaft 206 as shown in Fig. 8 (A). Furthermore, at the same time that the thickness detection levers 203 open, the shutter parts 204 open, and the IC card 110 is connected to the pin contacts 201.

On the other hand, in cases where a thin smart card 100 is inserted along the guide rails 202, since the thickness of the smart card 100 is smaller than the thickness of the IC card 110, the upper and lower detection levers 203 do not open, as is shown in Fig. 8 (B). Accordingly, the shutter parts 204 remain closed, so that the insertion of the smart card 100 is prevented by the shutter parts 204.

Furthermore, for example, the device shown in Fig. 9 is known as an IC cartridge reader which has a means for preventing the erroneous insertion of inappropriate IC cartridges (see Japanese Patent Application Kokai No. H2-35584).

This IC cartridge reader 300 comprises a chassis 301 in which an IC cartridge insertion opening 302 is opened. A shutter means 303 consisting of a shutter main body 304 and a spring member 305 which supports this shutter main body 304 so that the shutter main body 304 can open and close is disposed inside in the vicinity of the IC cartridge insertion opening 302. Furthermore, an erroneous insertion preventing projection 306 is formed on the shutter main body 304, and a cut-out 311 is formed in the end portion of the IC cartridge 310 in a position corresponding to this erroneous insertion preventing projection 306.

Furthermore, as is shown in Fig. 9 (A), when an appropriate IC cartridge 310 is inserted in the normal attitude from the IC cartridge insertion opening 302, the erroneous insertion preventing projection 306 is inserted into the interior of the cut-out 311, so that the tip end of the IC cartridge 310 contacts the shutter main body 304. Since an inclined surface 304a is formed on the shutter main body 304, a downward-oriented component force of the insertion force of the IC cartridge 310 is generated by this inclined surface 304a, so that the shutter main body 304 is driven downward against the elasticity of the spring member 305. As a result, the IC cartridge 310 can be inserted.

On the other hand, in cases where an inappropriate IC cartridge, e.g., an IC cartridge 310 that does not have a cut-out 311, or an IC cartridge 310 in which the position of the cut-out 311 is different, is inserted from the IC cartridge insertion opening 302, the tip end of the IC cartridge 310 contacts the erroneous insertion preventing projection 306 as shown in Fig. 9 (B). Since the erroneous insertion preventing projection 306 is formed perpendicular to the direction of insertion of the IC cartridge 310, a downward-oriented component force is not generated in the shutter main body 304, so that the shutter main body 304 is not opened. As a result, the insertion of the inappropriate IC cartridge 310 is prevented.

However, the following problems have been encountered in the IC card socket 200 shown in Fig. 8 and the IC cartridge reader 300 shown in Fig. 9:

Specifically, in the case of the IC card socket 200 shown in Fig. 8, a set of upper and lower thickness detection levers 203 are disposed on one of the guide rails 202 as a thin card insertion preventing mechanism, and inserted-object clamping parts 205 that detect the thickness of inserted objects that are inserted into the guide rails 202 are disposed on the end portions of the respective thickness detection levers 203 located on the side of the card insertion opening. Furthermore, shutter parts 204 are disposed on the end portions of the thickness detection levers 203 located on the side of the pin contacts. Such a mechanism is effective in cases where there is one card accommodating slot that accommodates IC cards, but cannot be used in card connectors in which at least two card accommodating slots that respectively accommodate thin cards and thick cards are installed adjacent to each other above and below. Furthermore, in regard to the mechanism that prevents the insertion of thin cards, this mechanism is complicated; furthermore, the manufacturing cost of the IC card socket 200 is high, and the socket is bulky.

Furthermore, in the case of the IC cartridge reader 300 shown in Fig. 9, a special IC cartridge 310 which has a cut-out 311 formed in the end portion is required, so that the cartridge reader 300 cannot be used with general all-purpose cards.

### SUMMARY OF THE INVENTION

Accordingly, the present invention was devised in light of the above-mentioned problems; it is an object of the present invention to provide a card connector which has at least two card accommodating slots that respectively accommodate thin cards and thick cards, wherein the card connector has a simple construction and is not bulky, and wherein the insertion of thin cards into the deep interior of the card accommodating slot that accommodates thick cards can be securely prevented.

A card connector according to Claim 1 of the present application is used to solve the above-mentioned problems.

Furthermore, the card connector of Claim 2 of the present application is the invention of Claim 1, wherein an inclined guide surface that guides the accommodation of the thin cards is disposed in the groove of the thin card insertion preventing device.

### BRIEF DESCRIFTION OF THE DRAWINGS

Fig. 1 is a plan view of an embodiment of the card connector of the present invention;
Fig. 2 is a front view of the card connector shown in Fig. 1;
Fig. 3 shows the card connector shown in Fig. 1, with Fig. 3 (A) being a right-side view and Fig. 3 (B) being a left-side view;
Fig. 4 shows the card insertion preventing device main body, with Fig. 4 (A) being a plan view, Fig. 4 (B) being a front view, and Fig. 4 (C) being a left-side view;
Fig. 5 illustrates the operating states of the thin card insertion preventing device, with Fig. 5 (A) being a partially sectional plan view which shows the operating state of the thin card insertion preventing device when a thick IC card C1 is inserted, and Fig. 5 (B) being a partially sectional plan view which shows the operating state of the thin card insertion preventing device when a thin smart card is inserted;
Fig. 6 shows an ISO standard smart card, with Fig. 6 (A) being a plan view, and Fig. 6 (B) being a side view;
Fig. 7 is a perspective view which shows a PCMCIA standard type-I IC card;
Fig. 8 shows a conventional IC card socket, with Fig. 8 (A) being a sectional view used to illustrate the operation in cases where a thick IC card is inserted, and Fig. 8 (B) being a sectional view used to illustrate the operation in cases where a thin smart card is inserted; and
Fig. 9 shows a prior art IC cartridge reader, with Fig. 9 (A) being a sectional view used to illustrate the operation in cases where an appropriate IC cartridge is inserted, and Fig. 9 (B) being a sectional view used to illustrate the operation in cases where an inappropriate IC cartridge is inserted.

### DESCRIPTION OF THE PREFERRED EMBODIMENTS

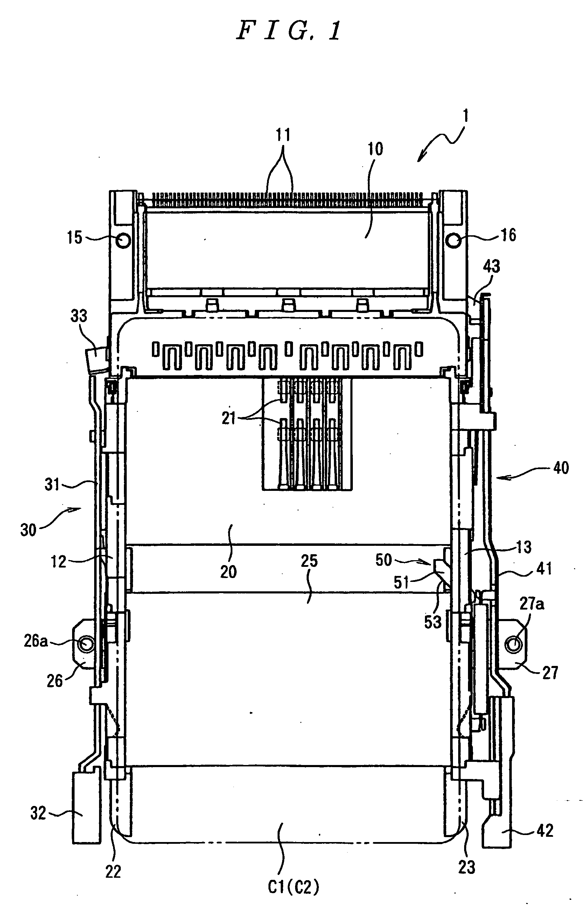

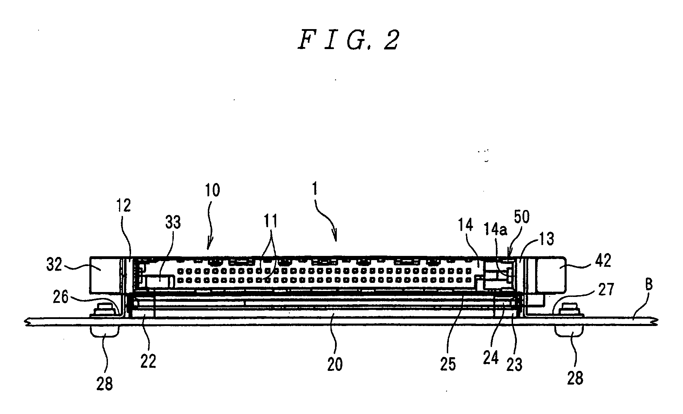

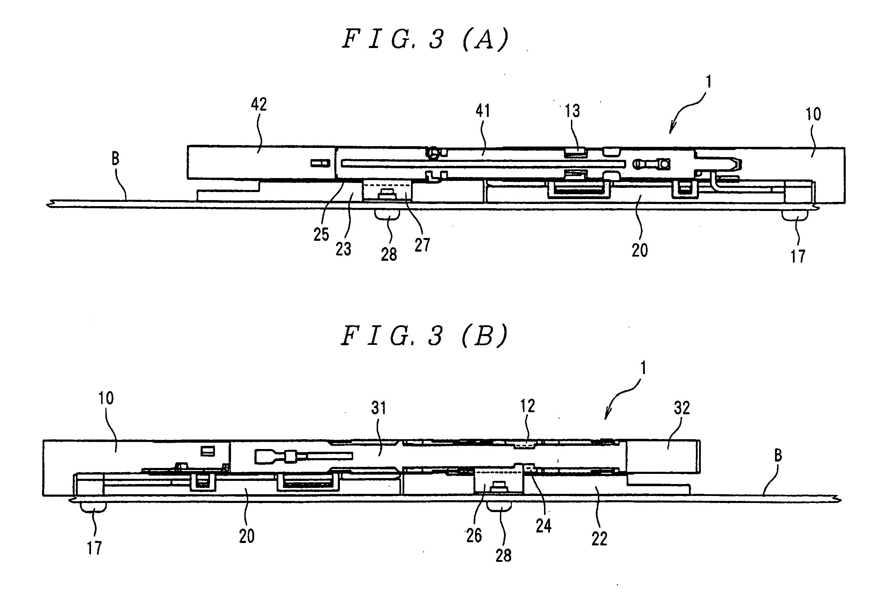

Next, an embodiment of the present invention will be described with reference to the attached figures. Fig. 1 is a plan view of an embodiment of the card connector of the present invention. Fig. 2 is a front view of the card connector shown in Fig. 1. Fig. 3 shows the card connector shown in Fig. 1, with Fig. 3 (A) being a right-side view, and Fig. 3 (B) being a left-side view.

In Figs. 1 through 3, the card connector 1 comprises an IC card connector part 10 which accommodates a PCMCIA standard thick IC card C1, and a smart card connector part 20 which accommodates an ISO standard thin smart card C2.

Here, a plurality of pin contacts 11 that are connected to the connector part (connector part 110 shown in Fig. 7) of the accommodated IC card C1 are disposed in the IC card connector part 10 in two rows (upper and lower) along the direction of length of the IC card connector part 10 (i.e., the left-right direction in Figs. 1 and 2). A pair of through-holes 15 and 16 through which attachment screws 17 that are used to fasten the card connector part 10 to a circuit board B are passed are formed in both end portions of the IC card connector part 10 with respect to the direction of length.

Furthermore, a plurality of pairs of plate spring contacts 21 that are contacted by terminal parts formed on the undersurface of the accommodated smart card C2 (the terminal parts 101 shown in Fig. 6) are disposed in the smart card connector part 20.

Moreover, a pair of card guiding arm parts 12 and 13 that extend from both end portions of the IC card connector part 10 with respect to the direction of length are disposed on both end portions of the IC card connector part 10 with respect to the direction of length. As is shown most clearly in Fig. 2, each of these card guiding arm parts 12 and 13 is formed with a substantially C-shaped cross section, and a card accommodating slot 14 that accommodates the IC card C1 is formed between these card guiding arm parts 12 and 13.

Furthermore, the above-mentioned smart card connector part 20 is disposed on the inside with respect to the card insertion direction (the upper side in Fig. 1) on the undersides of the card guiding arm parts 12 and 13. Meanwhile, a pair of guide rails 22 and 23 that guide the insertion of the smart card C2 are disposed on the card insertion side on the respective undersides of the card guiding arm parts 12 and 13. A metal plate 25 that forms a bridge between the two arm parts 12 and 13 is disposed between the card guiding arm parts 12 and 13 and the guide rails 22 and 23, and the card guiding arm parts 12 and 13 and guide rails 22 and 23 are joined by pawls (not shown in the figures) formed on both ends of the metal plate 25 with respect to the direction of length. Brackets 26 and 27 which have screw holes 26a and 27a into which attachment screws 28 used to fasten the pair of guide rails 22 and 23 to the circuit board B are screwed are attached to the card guiding arm parts 12 and 13 in a state in which these brackets contact the metal plate 25. Furthermore, a card accommodating slot 24 that accommodates the smart card C2 is formed between the pair of guide rails 22 and 23.

Furthermore, an eject mechanism 30 which is used to eject the IC card C1 that has been inserted into the IC card connector part 10 is disposed on the outside wall surface of one of the guiding arm parts 12. This eject mechanism 30 comprises a push bar 31 which can move in the directions of card insertion and ejection along the outside wall surface of the guiding arm part 12, a push-button 32 which is attached to the card insertion end of the push bar 31, and an eject bar 33 which is disposed on the opposite end of the push bar 31 from the card insertion end, and which is devised so that when one end of this eject bar 33 is pushed by the tip end of the push bar 31, the other end of the eject bar 33 ejects the IC card C1. Furthermore, an eject mechanism 40 which is used to eject the smart card C2 that has been inserted into the smart card connector part 20 is disposed on the outside wall surface of the other guiding arm part 13. This eject mechanism 40 comprises a push bar 41 which can move in the directions of card insertion and ejection along the outside wall surface of the guiding arm part 13, a push-button 42 which is attached to the card insertion end of the push bar 41, and an eject bar 43 which is disposed on the opposite end of the push bar 41 from the card insertion end, and which is devised so that when one end of this eject bar 43 is pushed by the tip end of the push bar 41, the other end of the eject bar 43 ejects the smart card C2.

Furthermore, a thin card insertion preventing device 50 which is used to prevent the insertion of a thin smart card C2 is shaft-supported so that this device 50 is free to pivot in the card guide part 14a of the card accommodating slot 14 that accommodates the IC card C1, on roughly the central portion of the other guiding arm part 13 with respect to the direction of card insertion.

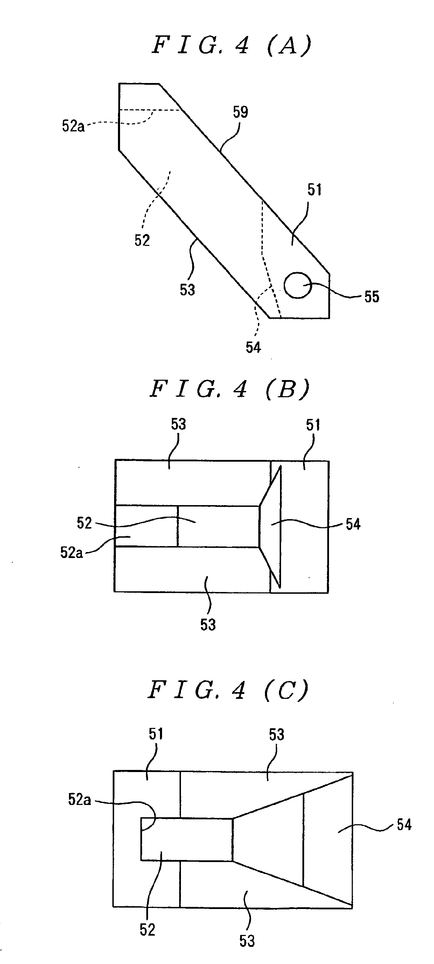

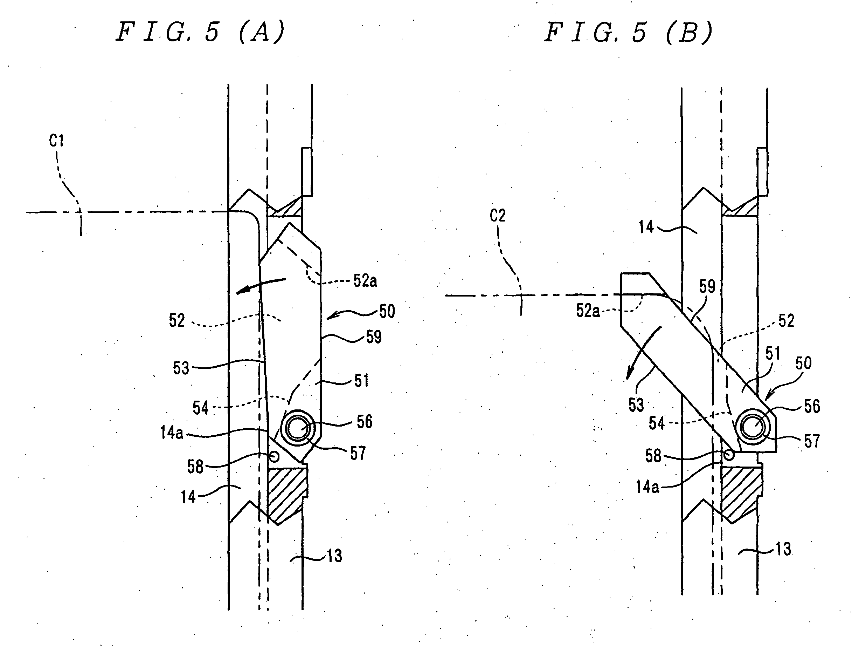

This thin card insertion preventing device 50 will be described in detail with reference to Figs. 4 and 5. Fig. 4 shows the card insertion preventing device main body; Fig. 4 (A) is a plan view, Fig. 4 (B) is a front view, and Fig. 4 (C) is a left-side view. Fig. 5 illustrates the operating states of the thin card insertion preventing device; Fig. 5 (A) is a partially sectional plan view which shows the operating state of the thin card insertion preventing device when a thick IC card C1 is inserted, and Fig. 5 (B) is a partially sectional plan view which shows the operating state of the thin card insertion preventing device when a thin smart card is inserted.

As is shown in Fig. 5, the thin card insertion preventing device 50 is constructed from a card insertion preventing device main body 51, a pivoting shaft 56 which shaft-supports this card insertion preventing device main body 51 so that this main body 51 can pivot, a torsion spring 57 which is wound around the circumference of the pivoting shaft 56, and which drives the card insertion preventing device main body 51 so that this device main body 51 is caused to pivot toward the inside (i.e., in the direction indicated by the arrows in Figs. 5 (A) and 5 (B)), and a stopper 58 which regulates the pivoting range of the card insertion preventing device main body 51. The direction of pivoting of the card insertion preventing device main body 51 is oriented along the main surfaces of the card that is inserted.

Here, as is shown in Fig. 4, the card insertion preventing device main body 51 is formed by a plate member which has a groove 52 that passes through from the inside to the outside in the central portion (with respect to the vertical direction); this member is formed by molding a synthetic resin material. The groove 52 has a vertical height that allows the accommodation of only a thin smart card C2. Furthermore, the inside surface of the plate member is used as a cam surface 53 for the thick IC card C1, and the outside surface 59 of the plate member is formed as a surface that is substantially parallel to the cam surface 53. Moreover, an inclined guide surface 54 which guides the accommodation of the thin smart card C2 is formed in the groove 52. Furthermore, a shaft hole 55 through which the pivoting shaft 56 is passed is formed through the card insertion preventing device main body 51 in the vertical direction.

Next, the operation of the thin card insertion preventing device 50 will be described with reference to Figs. 1 and 5.

First, when the card connector 1 is mounted on the circuit board B, and no card of any type is accommodated, the card insertion preventing device main body 51 is pivoted toward the inside as shown in Fig. 1, so that a state is maintained in which the cam surface 53 is inclined with respect to the insertion direction, and in which the inside end surface 52a of the groove 52 is substantially perpendicular to the insertion direction. In this case, the card insertion preventing device main body 51 is driven by the torsion spring 57 so that this main body 51 is pivoted toward the inside; however, the end portion of the cam surface 53 on the side of the pivoting shaft 56 contacts the stopper 58, so that the pivoting range is restricted. Furthermore, since the inside end surface 52a prevents the insertion of a smart card C2, this surface may be a surface that rises toward the right instead of being perpendicular to the insertion direction in Fig. 5 (B).

In this state, when a thick IC card C1 is inserted into the card accommodating slot 14 between the card guiding arm parts 12 and 13, the tip end of the IC card C1 contacts the cam surface 53 of the card insertion preventing device main body 51 as shown in Fig. 5 (A), so that the card insertion preventing device main body 51 pivots toward the outside as the insertion progresses. In this case, the state of contact between the side surface of the IC card C1 and the cam surface 53 is maintained by the spring force of the torsion spring 57. Furthermore, since the outside surface 59 of the card insertion preventing device main body 51 is formed as a surface that is substantially parallel to the cam surface 53, the amount of protrusion of the card insertion preventing device main body 51 from the guiding arm part 13 can be reduced in a state in which the card insertion preventing device main body 51 has pivoted toward the outside, so that collision with the push bar 41 disposed on the outside wall surface of the guiding arm part 13 can be avoided.

Furthermore, when the IC card C1 is inserted even further, the IC card C1 engages with the IC card connector part 10, so that the connector part of the IC card C1 and the pin contacts 11 of the IC card connector part 10 are electrically connected.

On the other hand, when a thin smart card C2 is inserted into the card accommodating slot 14 between the card guiding arm parts 12 and 13 in a state in which the card connector 1 is mounted on the circuit board B, the tip end portion of the smart card C2 is accommodated in the groove 52 of the card insertion preventing device main body 51, and the tip end surface of the smart card C2 contacts the inside end surface 52a of the groove 52, as shown in Fig. 5 (B). In this case, even if the insertion of the smart card C2 is performed without stabilization in the vertical direction inside the card accommodating slot 14, the tip end portion of the smart card C2 is guided along the inclined guide surface 54, and is securely conducted into the groove 52. Furthermore, since the tip end surface of the smart card C2 contacts the inside end surface 52a of the groove 52, the insertion of the smart card C2 is prevented by the card insertion preventing device main body 51. Accordingly, the insertion of such a thin smart card card *[sic]* C2 into the deep interior of the card accommodating slot 14 that accommodates thick IC cards C1 can be securely prevented. Here, the thin card insertion preventing device 50 that allows the insertion of thick IC cards C1 and prevents the insertion of thin smart cards C2 was constructed from a card insertion preventing device main body 51, a pivoting shaft 56, a torsion spring 57 wound around the circumference of the pivoting shaft 56, and a stopper 58 that restricts the pivoting range of the card insertion preventing device main body 51. Accordingly, the mechanism that prevents the insertion of thin cards can be constructed using a simple construction that has a low height, and the card connector 1 can be manufactured inexpensively. Furthermore, there is no need to form cut-outs, etc., in the IC card C1 or smart card C2, so that the present invention can be applied to general all-purpose cards.

Furthermore, when a thin smart card C2 is inserted into the card accommodating slot 24 between the guide rails 22 and 23 in a state in which the card connector 1 is mounted on the circuit board B, the smart card C2 is accommodated in the smart card connector part 20, so that the terminal parts formed on the undersurface of the smart card C2 contact the plurality of pairs of plate spring contacts 21, and are electrically connected to these plate spring contacts 21.

An embodiment of the present invention has been described above. However, the present invention is not limited to this embodiment; various alterations may be made.

For example, the thin card insertion preventing device 50 was disposed on the side of the guiding arm part 13; however, it would also be possible to dispose this device on the side of the opposite guiding arm part 12, or to dispose such devices on both guiding arm parts 12 and 13.

Furthermore, the spring that drives the card insertion preventing device main body 51 toward the inside may be a plate spring or coil spring, etc., instead of a torsion spring. Moreover, the stopper 58 may be disposed in a position that contacts a surface other than the cam surface 53.

Furthermore, the cards used may be cards other than PCMCIA standard IC cards C1 or ISO standard smart cards C2.

Moreover, it would also be possible to dispose the card accommodating slot 14 that accommodates thick IC cards C1 on the lower side, and to dispose the card accommodating slot 24 that accommodates thin smart cards C2 on the upper side. Furthermore, the number of card accommodating slots is not limited to two slots; the card connector may have three or more card accommodating slots.

In the card connector of Claim 1 of the present application, as was described above, a thin card insertion preventing device which has a cam surface for thick cards and a groove that can accommodate thin cards is shaft-supported so that this device can pivot on the card guide part of the card accommodating slot that accommodates the thick cards. Accordingly, in a card connector which has at least two card accommodating slots that respectively accommodate thin cards and thick cards, the insertion of thin cards into the deep interior of the card accommodating slot that accommodates the thick cards can be securely prevented by means of a simple construction that has a low height.

Furthermore, the card connector of Claim 2 of the present application is devised so that in the invention of Claim 1, an inclined guide surface that guides the accommodation of the above-mentioned thin cards is disposed in the groove of the above-mentioned thin card insertion preventing device. Accordingly, even if the insertion of a thin card is performed without stabilization inside the card accommodating slot, the thin card is guided along the inclined guide surface and securely conducted into the groove.

## Claims

1. A card connector (1) comprising at least two card accommodating slots (14, 24) which are adapted to accommodate thin cards (C2) and thick cards (C1), respectively,
wherein a thin card insertion preventing device (50) which has a cam surface (53) for the thick cards (C1) and a groove (52) for accommodating the thin cards (C2) is shaft-supported (56) so that this device (50) can pivot on a card guide part (13) of the card accommodating slot (14) when accommodating the thick cards (C1).

2. The card connector (1) according to claim 1 wherein an inclined guide surface (54) for guiding the accommodation of the thin cards (C2) is disposed in the groove (52) of the thin card insertion preventing device (50).

## Patentansprüche

1. Kartensteckverbinder (1), der wenigstens zwei Kartenaufnahmeschlitze (14, 24) umfasst, die dafür eingerichtet sind, dünne Karten (C2) bzw. dicke Karten (C1) aufzunehmen,
wobei eine Einsteckverhinderungsvorrichtung (50) für dünne Karten, die eine Nockenfläche (53) für die dicken Karten (C1) und eine Rille (52) zum Aufnehmen der dünnen Karten (C2) hat, wellengestützt (56) ist, so dass diese Vorrichtung (50) an einem Kartenführungsteil (13) des Kartenaufnahmeschlitzes (14) schwenken kann, wenn die dicken Karten (C1) aufgenommen werden.

2. Kartensteckverbinder (1) nach Anspruch 1, wobei eine geneigte Führungsfläche (54) zum Führen des Aufnehmens der dünnen Karten (C2) in der Rille (52) der Einsteckverhinderungsvorrichtung (50) für dünne Karten angeordnet ist.

## Revendications

1. Connecteur de carte (1), comprenant au moins deux fentes de réception de cartes (14, 24), adaptées pour recevoir des cartes minces (C2) et des cartes épaisses (C1) respectivement,
dans lequel le dispositif empêchant l'insertion des cartes minces (50), comportant une surface à came (53) pour les cartes épaisses (C1) et une rainure (52) pour recevoir les cartes minces (C2), est supporté par un arbre (56), de sorte que ce dispositif (50) peut pivoter sur une partie de guidage des cartes (13) de la fente de réception des cartes (14) lors de la réception des cartes épaisses (C1).

2. Connecteur de carte (1) selon la revendication 1, dans lequel une surface de guidage inclinée (54) pour guider la réception des cartes minces (C2) est agencée dans la rainure (52) du dispositif empêchant une insertion des cartes minces (50).
